# EUROPEAN PATENT APPLICATION

(11) **EP 2 804 368 A1**
(43) Date of publication of application: **19.11.2014**
(21) Application number: 12865270.8
(22) Date of filing: 25.12.2012
(51) Int. Cl.: H04N 1/21, B41J 5/30, G06F 12/00, G06F 12/02, G06F 12/08

(54) **IMAGE PROCESSING APPARATUS AND IMAGE FORMING APPARATUS**

(30) Priority: 10.01.2012 JP 2012001870
(71) Applicant: Kyocera Document Solutions Inc., Osaka-shi, Osaka 540-8585 (JP)
(72) Inventor: TANBA Masato, Osaka-shi Osaka 540-8585 (JP); TOYODA Takashi, Osaka-shi Osaka 540-8585 (JP)
(74) Representative: Schäfer, Matthias W.
(86) International application number: PCT/JP2012/083447
(87) International publication number: WO 2013/105428

(57) **Abstract**

In a defragmentation process, the memory area identifying unit 23 identifies logical memory areas in use that are required to guarantee stored data and logical memory areas not in use that are not required to guarantee stored data among memory areas allocated in the RAM 12, the area reassigning unit 24 assigns one physical memory area for consecutive plural logical memory areas not in use among the logical memory areas identified by the memory area identifying unit 23, and the address managing unit 25 performs address mapping between the consecutive plural logical memory areas not in use and the aforementioned one physical memory area assigned to the consecutive plural logical memory areas not in use.

## Description

### Technical Field

The present invention relates to an image processing apparatus and an image forming apparatus.

### Background Art

A copier performs defragmentation of a buffer memory when image data of a predetermined number of output pages can not be consecutively stored in the buffer memory (see PATENT LITERATURE #1, for example).

### Citation list

### Patent literature

PATENT LITERATURE #1: Japanese Patent Application Publication NO. 2007-174538.

### Summary of invention

### Technical problem

An image processing apparatus managing a memory using a virtual memory system performs remapping between a logical memory area in a virtual address space and a physical memory area in a physical address space when performing defragmentation for the memory.

There is a problem that if lots of fragmentation occur in a memory, remapping between a logical memory area in a virtual address space and a physical memory area in a physical address space is performed a large number of times in defragmentation, and consequently the defragmentation requires a long time. The long time required for the defragmentation causes the continuous status that a part or all of a memory area in the memory is not available continues during the long time.

This invention has been made in view of the aforementioned problem. It is an object of the present invention to achieve an image processing apparatus and an image forming apparatus performing defragmentation in a short time.

### Solution to problem

The present invention solves the aforementioned problem as follows.

An image processing apparatus according to the present invention includes a memory area identifying unit that identifies logical memory areas in use that are required to guarantee stored data and logical memory areas not in use that are not required to guarantee stored data among memory areas allocated in a memory in a defragmentation process; an area reassigning unit that assigns one physical memory area to consecutive plural logical memory areas not in use among the logical memory areas identified by the memory area identifying unit in the defragmentation process; and an address managing unit that performs address mapping between the consecutive plural logical memory areas not in use and said one physical memory area assigned to the consecutive plural logical memory areas not in use.

Therefore, address mapping is performed only once for the consecutive plural logical memory areas not in use and a small number of times of address mapping is sufficient, and consequently defragmentation is performed in a short time.

An image forming apparatus according to the present invention includes an image processing apparatus that stores image data in a memory, performs a predetermined process for the image data, and performs a defragmentation process of the memory; and a printing device. The image processing apparatus includes a memory area identifying unit that identifies logical memory areas in use that are required to guarantee stored data and logical memory areas not in use that are not required to guarantee stored data among memory areas allocated in the memory in the defragmentation process; an area reassigning unit that assigns one physical memory area to consecutive plural logical memory areas not in use among the logical memory areas identified by the memory area identifying unit in the defragmentation process; and an address managing unit that performs address mapping between the consecutive plural logical memory areas not in use and said one physical memory area assigned to the consecutive plural logical memory areas not in use; a job processing unit that performs a print job using the printing device; and an image processing unit that performs image processing for the print job. The job processing unit and/or the image processing unit allocate/allocates the memory areas in the memory and perform/performs the print job and/or the image processing using the allocated memory area. Advantageous effect of invention

According to the present invention, in an image processing apparatus or the like defragmentation is performed in a short time.

These and other objects, features and advantages of the present invention will become more apparent upon reading of the following detailed description along with the accompanied drawings.

### Brief description of drawings

Fig. 1 shows a block diagram that indicates a configuration of an image forming apparatus according to an embodiment of the present invention;
Fig. 2 shows a flowchart that explains a behavior of an image processing apparatus in Fig. 1 in a defragmentation process;
Fig. 3A shows a diagram that indicates an example of arrangement of memory areas by the image processing apparatus in Fig. 1 before the defragmentation process; and
Fig. 3B shows a diagram that indicates an example of arrangement of memory areas by the image processing apparatus in Fig. 1 after the defragmentation process.

### Description of embodiments

Hereinafter, an embodiment according to aspects of the present invention will be explained with reference to drawings.

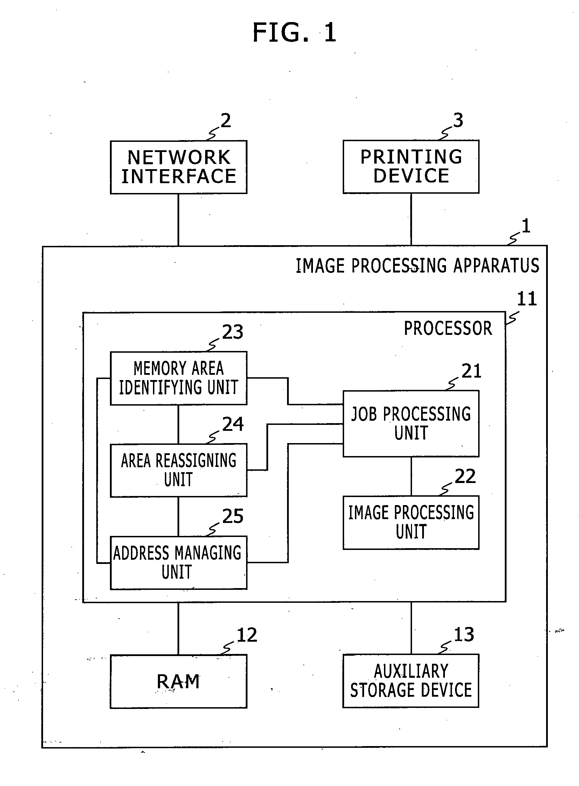

Fig. 1 shows a block diagram that indicates a configuration of an image forming apparatus according to an embodiment of the present invention. The image forming apparatus shown in Fig. 1 is a printer, a multi function peripheral or the like, and includes an image processing apparatus 1, a network interface 2, and a printing device 3.

The image processing apparatus 1 is connected to the network interface 2, the printing device 3 and the like, and performs a print job on the basis of a print request. The image processing apparatus 1 is configured as a computer, ASIC (Application Specific Integrated Circuit), and/or the like. The network interface 2 is a communication device that performs communication through a network with an unshown host device. For example, the network interface 2 receives print data described in a page description language as a print request from an unshown host device. The printing device 3 is provided print image data from the image processing apparatus 1, performs sorts of processes (e.g. half toning) for the print image data, and performs printing on the basis of the processed data.

This image processing apparatus 1 include a processor 11, a RAM (Random Access Memory) 12, and an auxiliary storage device 13.

The processor 11 embodies processing units that perform sorts of processes using a CPU (Central Processing Unit), an ASIC or the like. The RAM 12 is a volatile storage device that temporarily stores sorts of data related to a process performed by the processor 11. The auxiliary storage device 13 is a non volatile storage device that has stored sorts of data and a program executed by the CPU in the processor 11. As the auxiliary storage device 13, a ROM (Read Only Memory), a flash memory, a hard disc drive or the like is used.

In the processor 11, a job processing unit 21, an image processing unit 22, a memory area identifying unit 23, an area reassigning unit 24 and an address managing unit 25 are embodied.

The job processing unit 21 receives a request based on a user operation to an unshown operation panel and a request such as a print request received from an unshown host device, and causes to perform a job such as a print job corresponding to the request.

The image processing unit 22 generates image data by rasterizing PDL (Page Description Language) data or the like, and generates print image data by performing image processing (resolution conversion, enlargement/reduction, rotation and the like) for the image data and provides the print image data to the printing device 3.
Thus, the image processing unit 22 performs image processing for a print job.

The job processing unit 21 and/or the image processing unit 22, when necessary, allocate/allocates memory areas in the RAM 12, and perform/performs the print job and/or the image processing using the allocated memory area.

Further, at a timing when the job processing unit 21 completes a print job or the like, the job processing unit 21 performs a defragmentation process using the memory area identifying unit 23, the area reassigning unit 24, and the address managing unit 25.

In the defragmentation process, among memory areas allocated in the RAM 12, the memory area identifying unit 23 identifies logical memory areas in use that are required to guarantee stored data and logical memory areas not in use that are not required to guarantee stored data.

In the defragmentation process, among the logical memory areas identified by the memory area identifying unit, the area reassigning unit 24 allocates one physical memory area for consecutive plural logical memory areas not in use.

In this embodiment; in the defragmentation process, the area reassigning unit 24 rearranges one or more physical memory areas corresponding to one logical memory area in use so as to consecutively locate the aforementioned one or more physical memory areas; and in the defragmentation process, the address managing unit 25 performs address mapping between the aforementioned logical memory area in use and the rearranged one or more physical memory areas.

In this embodiment, the area reassigning unit 24 copies data in the aforementioned one or more physical memory areas before the rearrangement into the rearranged one or more physical memory areas. On the other hand, for the logical memory areas not in use, the area reassigning unit 24 does not copy data in physical memory areas corresponding to the consecutive plural logical memory areas not in use into the allocated physical memory area.

The address managing unit 25 performs address conversion between a virtual address space and a physical address space on the basis of mapping data and manages the mapping data, which indicates relationship between the physical address space of the RAM 12 and the virtual address space. For example, the address managing unit 21 is embodied as a memory management unit (MMU).

In the defragmentation process, the address managing unit 25 performs address mapping (i.e. renewing the mapping data) between the consecutive plural logical memory areas not in use and the aforementioned one physical memory area assigned to the consecutive plural logical memory areas not in use.

The following part explains a behavior of the aforementioned image forming apparatus.

Upon receiving a print request through the network interface 2, the job processing unit 21 causes the image processing unit 22 to generate print image data based on the print request, and provides the print image data to the printing device 3 to perform printing. At this time, the job processing unit 21 and the image processing unit 22 allocate memory areas required for data processing in the RAM 12, and perform the data processing using the memory areas.

Due to dynamically allocating the memory areas, fragmentation occurs in the RAM 12 and therefore the job processing unit 21 performs defragmentation at a predetermined timing.

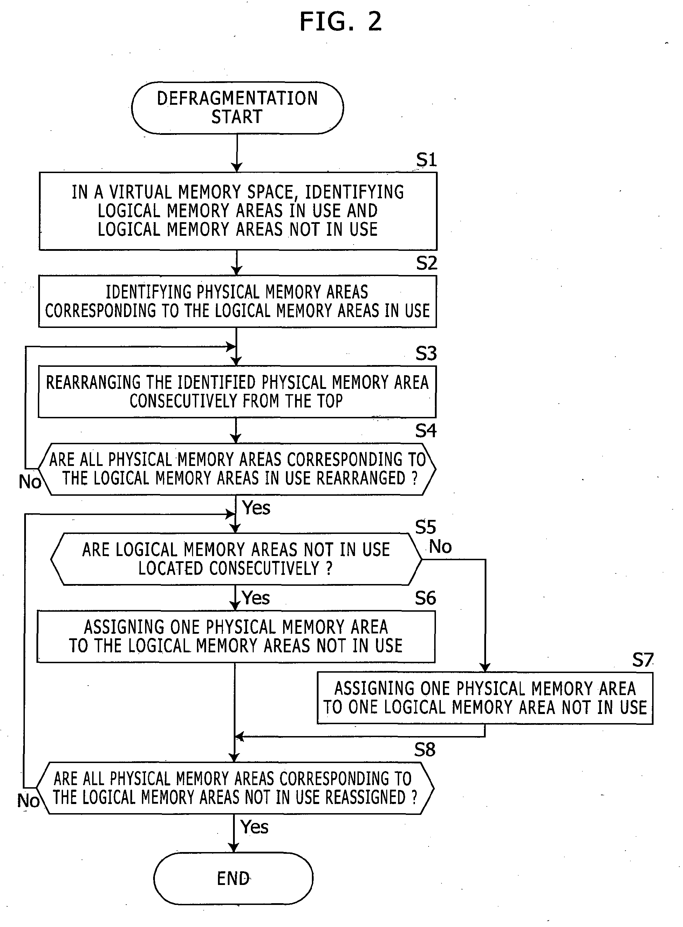

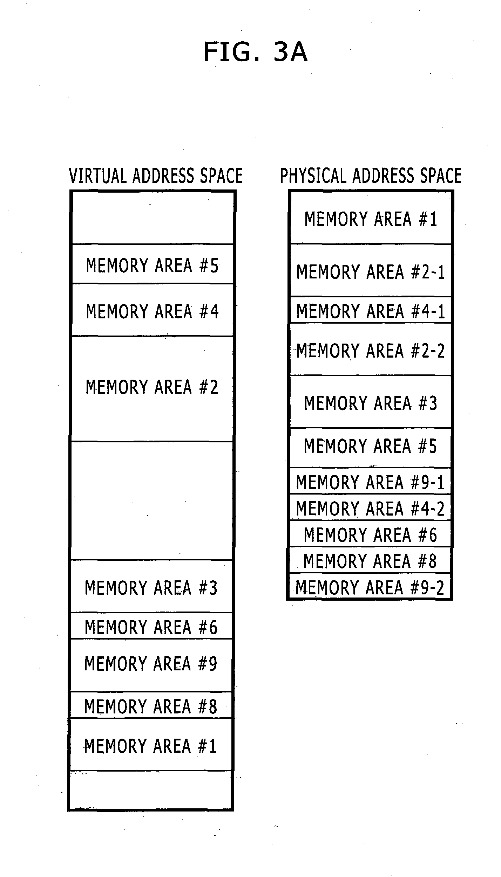

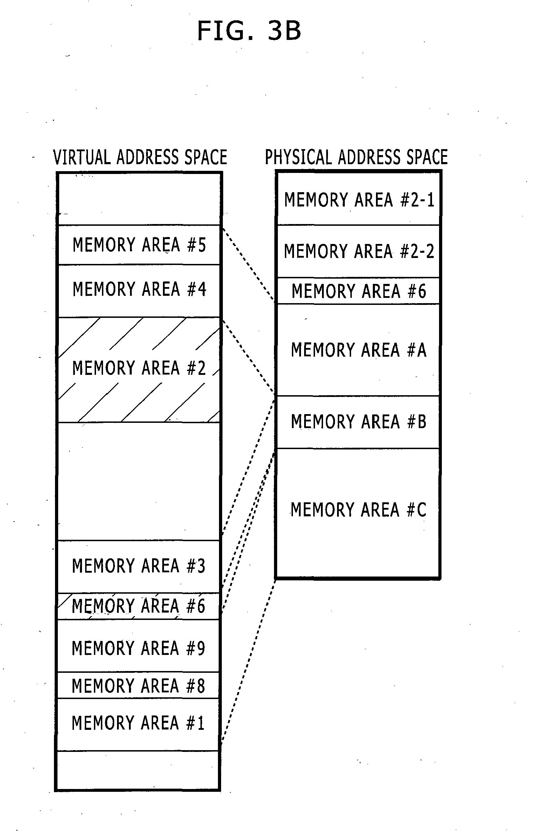

Here the defragmentation process by the image processing apparatus 1 is explained. Fig. 2 shows a flowchart that explains a behavior of an image processing apparatus in Fig. 1 in a defragmentation process. Fig. 3A and Fig. 3B show diagrams that indicates an example of arrangement of memory areas by the image processing apparatus in Fig. 1 before and after the defragmentation process. Fig. 3A indicates an example of arrangement of the memory areas before the defragmentation process, and Fig. 3B indicates an example of arrangement of the memory areas after the defragmentation process.

Firstly, among memory areas allocated in the RAM 12 by the job processing unit 21, the image processing unit 22 and the like, the memory area identifying unit 23 identifies logical memory areas in use that are required to guarantee stored data and logical memory areas not in use that are not required to guarantee stored data (in Step S1).

For example, at a timing after completion of a print job, a logical memory area in which image data of the print job is stored is identified as a logical memory area not in use. Further, a logical memory area continuously used for management of jobs including a job that has not been processed yet is identified as a logical memory area in use.

In Fig. 3A, the logical memory areas #1 to #9 are allocated, and the physical memory areas #1 to #9 are allocated so as to correspond to the logical memory areas #1 to #9. However, the logical memory area #2 is allocated so as to correspond to the plural physical memory areas #2-1 and #2-2. In the same manner, the logical memory areas #4 and #9 are allocated so as to correspond to the plural physical memory areas #4-1 and #4-2, and #9-1 and #9-2, respectively.

Subsequently, the memory area identifying unit 23 identifies physical memory areas corresponding to the identified logical memory areas in use. Specifically, the memory area identifying unit 23 identifies physical memory areas corresponding to the logical memory areas in use on the basis of the mapping data of the address managing unit 25 (in Step S2).

The area reassigning unit 24 rearranges one or more physical memory areas corresponding to one of the identified one or more logical memory areas in use so as to consecutively locate the aforementioned one or more physical memory areas, and the address managing unit 25 performs address mapping between the aforementioned logical memory area in use and the rearranged one or more physical memory areas in the defragmentation process (in Step S3). Subsequently, the area reassigning unit 24 copies data in the aforementioned one or more physical memory areas before the rearrangement into the rearranged one or more physical memory areas.

Until the rearrangement is completed for all of the identified logical memory areas in use, the aforementioned process in Step S3 is performed one by one in order (in Step S4).

In Fig. 3A and Fig. 3B, for example, if the logical memory area #2 and the logical memory area #6 are in use, then the physical memory areas #2-1, #2-2, and #6 corresponding to them are rearranged so as to be consecutively located from the top.

Upon completing the rearrangement for all of the identified logical memory areas in use, the area reassigning unit 24 identifies whether one of the logical memory areas not in use identified by the memory area identifying unit 23 is consecutive to the next logical memory area not in use or not (in Step S5).

If the logical memory areas not in use are consecutive, the area reassigning unit 24 assigns one physical memory area to the consecutive plural logical memory areas, and the address managing unit 25 performs address mapping between the consecutive plural logical memory areas and the aforementioned one physical memory area assigned thereto (in Step S6).

Contrarily, if the logical memory areas not in use are not consecutive, the area reassigning unit 24 assigns one physical memory area to one logical memory area, and the address managing unit 25 performs address mapping between the aforementioned one logical memory area and the aforementioned one physical memory area assigned to the aforementioned one logical memory area (in Step S7).

For the logical memory areas not in use, the area reassigning unit 24 does not copy data in physical memory areas corresponding to the consecutive plural logical memory areas not in use into the assigned physical memory area.

Until the rearrangement is completed for all of the identified logical memory areas not in use, the aforementioned processes in Steps S5 to S7 are performed one by one in order (in Step S8).

In Fig. 3A and Fig. 3B, for example, if the logical memory areas other than the logical memory area #2 and the logical memory area #6 are not in use, then the logical memory area #5 and the logical memory area #4 are consecutive, and therefore, one physical memory area #A is assigned to the logical memory area #5 and the logical memory area #4, and the physical memory area #A has the size equal to the sum of the size of the logical memory area #5 and the size of the logical memory area #4. After that, the logical memory area #5 and the logical memory area #4 are handled as one logical memory area.

In the same manner, since the logical memory area #9, the logical memory area #8, and the logical memory area #1 are consecutive, one physical memory area #C is assigned to the logical memory area #9, the logical memory area #8, and the logical memory area #1, and the physical memory area #C has the size equal to the sum of the size of the logical memory area #9, the logical memory area #8, and the size of the logical memory area #1.

Contrarily, since the logical memory area #3 is not consecutive to any other logical memory areas not in use, one physical memory area B is assigned to the logical memory area #3, and the physical memory area #B has the size equal to the size of the logical memory area #3.

Thus, the physical memory areas #A, #B, and #C are assigned consecutively next to the physical memory areas #2-1, #2-2, and #6.

As mentioned, in the aforementioned embodiment, in a defragmentation process, the memory area identifying unit 23 identifies logical memory areas in use that are required to guarantee stored data and logical memory areas not in use that are not required to guarantee stored data among memory areas allocated in the RAM 12, the area reassigning unit 24 assigns one physical memory area to consecutive plural logical memory areas not in use among the logical memory areas identified by the memory area identifying unit 23, and the address managing unit 25 performs address mapping between the consecutive plural logical memory areas not in use and the aforementioned one physical memory area assigned to the consecutive plural logical memory areas not in use.

Therefore, address mapping is performed only once for the consecutive plural logical memory areas not in use and a small number of times that the address managing unit 25 performs address mapping is sufficient, and consequently defragmentation is performed in a short time.

It should be noted that the aforementioned description has been presented for purposes of illustration and description, and is not intended to be exhaustive nor to limit the present invention.

Further, it should be understood that various changes and modifications to the embodiments described herein will be apparent to those skilled in the art. Such changes and modifications may be made without departing from the spirit and scope of the present subject matter and without diminishing its intended advantages. It is therefore intended that such changes and modifications be covered by the appended claims.

### Industrial applicability

For example, the present invention is applicable to an image processing apparatus and an image forming apparatus.

## Claims

1. An image processing apparatus that stores image data in a memory, performs a predetermined process for the image data, and performs a defragmentation process of the memory, comprising:
a memory area identifying unit that identifies logical memory areas in use that are required to guarantee stored data and logical memory areas not in use that are not required to guarantee stored data among memory areas allocated in the memory in the defragmentation process;
an area reassigning unit that assigns one physical memory area to consecutive plural logical memory areas not in use among the logical memory areas identified by the memory area identifying unit in the defragmentation process; and
an address managing unit that performs address mapping between the consecutive plural logical memory areas not in use and said one physical memory area assigned to the consecutive plural logical memory areas not in use in the defragmentation process.

2. The image processing apparatus according to claim 1, wherein:
the area reassigning unit rearranges one or more physical memory areas corresponding to one of the logical memory areas in use so as to consecutively locate said one or more physical memory areas in the defragmentation process; and
the address managing unit performs address mapping between said logical memory area in use and the rearranged one or more physical memory areas in the defragmentation process.

3. The image processing apparatus according to claim 2, wherein the area reassigning unit copies data in said one or more physical memory areas before the rearrangement into the rearranged one or more physical memory areas.

4. The image processing apparatus according to claim 1, wherein for the logical memory areas not in use, the area reassigning unit does not copy data in physical memory areas corresponding to the consecutive plural logical memory areas not in use into the assigned physical memory area.

5. An image forming apparatus, comprising: an image processing apparatus that stores image data in a memory, performs a predetermined process for the image data, and performs a defragmentation process of the memory; and a printing device;
wherein the image processing apparatus comprises:
a memory area identifying unit that identifies logical memory areas in use that are required to guarantee stored data and logical memory areas not in use that are not required to guarantee stored data among memory areas allocated in the memory in the defragmentation process;
an area reassigning unit that assigns one physical memory area to consecutive plural logical memory areas not in use among the logical memory areas identified by the memory area identifying unit in the defragmentation process; and
an address managing unit that performs address mapping between the consecutive plural logical memory areas not in use and said one physical memory area assigned to the consecutive plural logical memory areas not in use;
a job processing unit that performs a print job using the printing device; and
an image processing unit that performs image processing for the print job;
wherein the job processing unit and/or the image processing unit allocate/allocates the memory areas in the memory and perform/performs the print job and/or the image processing using the allocated memory area.

6. The image forming apparatus according to claim 5, wherein the image processing apparatus performs the defragmentation process before the job processing unit completes the print job.
